# EUROPEAN PATENT APPLICATION

(11) **EP 4 570 563 A1**
(43) Date of publication of application: **18.06.2025**
(21) Application number: 24193833.1
(22) Date of filing: 09.08.2024
(51) Int. Cl.: B60L 1/00, B60L 58/20, H02J 7/34, B60L 7/18, B60L 50/10

(54) **POWER MANAGEMENT CIRCUIT FOR ELECTRIC AUXILIARY VEHICLE**

(30) Priority: 12.12.2023 TW 112148350
(71) Applicant: APh ePower Co., Ltd., Kaohsiung City 821 (TW)
(72) Inventor: SU, Hsiu-Hsien, 821 Kaohsiung City (TW); TZENG, Yun-Chi, 821 Kaohsiung City (TW); HUNG, Te-Chun, 821 Kaohsiung City (TW)
(74) Representative: Becker, Eberhard

(57) **Abstract**

Disclosed is a power management circuit (100) for an electric auxiliary vehicle (10) including a battery (BT), a motor (MT), and a power receiving terminal (TC). The power management circuit includes a transformer (TR), a primary circuit (110), first (120) and second power transmission circuits (130), and a controller (140). The transformer includes primary (LP) and secondary windings (LS). The primary circuit (110) is connected to primary winding and power receiving terminal. The first power transmission circuit is connected to secondary winding and battery. The second power transmission circuit is connected to secondary winding, battery, and motor. The controller controls primary circuit and first power transmission circuit to provide battery power (PB) of battery to power receiving terminal in a first operating mode. The controller controls second power transmission circuit in a second operating mode, so that second power transmission circuit uses power of motor (PM) to charge the battery.

## Description

### BACKGROUND

### Technical Field

The disclosure relates to a power management circuit, and in particular to a power management circuit for an electric auxiliary vehicle.

### Description of Related Art

An electric auxiliary vehicle (such as an electric wheelchair, an electric bicycle, an electric scooter, or an electric motorcycle) may use the battery power to drive the motor, so that the motor provides auxiliary power to assist the user. The electric auxiliary vehicle receives external power in a wireless or wired manner and uses the external power to charge the battery.

In some designs, the electric auxiliary vehicle may feed battery power back to an external power source. However, the current charging mechanism and power feedback mechanism are implemented using different power converters. Therefore, the design cost of the electric auxiliary vehicle is increased. It may be seen from the above, how to provide a circuit with multiple power transmission functions is one of the research focuses of persons skilled in the art.

### SUMMARY

The disclosure provides a power management circuit for an electric auxiliary vehicle.

The power management circuit of the disclosure is for the electric auxiliary vehicle. The electric auxiliary vehicle includes a battery, a motor, and a power receiving terminal. The power management circuit includes a transformer, a primary circuit, a first power transmission circuit, a second power transmission circuit, and a controller. The transformer includes a primary winding and a secondary winding. The primary circuit is electrically connected to the primary winding and the power receiving terminal. The first power transmission circuit is electrically connected to the secondary winding and the battery. The second power transmission circuit is electrically connected to the secondary winding, the battery, and the motor. The controller is electrically connected to the primary circuit, the first power transmission circuit, and the second power transmission circuit. The controller controls the primary circuit and the first power transmission circuit in a first operating mode to provide the battery power of the battery to the power receiving terminal. The controller controls the second power transmission circuit in a second operating mode, so that the second power transmission circuit uses the power of the motor to charge the battery.

Based on the above, in the first operating mode, the power management circuit feeds back the battery power of the battery to the power receiving terminal. In the second operating mode, the power management circuit uses the power of the motor to charge the battery. In this way, the power management circuit has multiple power transmission functions.

### BRIEF DESCRIPTION OF THE DRAWINGS

FIG. 1 is a schematic diagram of a power management circuit according to an embodiment of the disclosure.
FIG. 2 is a schematic circuit diagram of a power management circuit according to an embodiment of the disclosure.
FIG. 3 is a schematic operation diagram of a first operating mode according to an embodiment of the disclosure.
FIG. 4 is a schematic operation diagram of a second operating mode according to an embodiment of the disclosure.
FIG. 5 is a schematic operation diagram of a third operating mode according to an embodiment of the disclosure.
FIG. 6 is a schematic operation diagram of a fourth operating mode according to an embodiment of the disclosure.

### DESCRIPTION OF THE EMBODIMENTS

Some embodiments of the disclosure will be described in detail with reference to the accompanying drawings. The reference numerals cited in the following description will be regarded as the same or similar components when the same reference numerals appear in different drawings. The embodiments are only part of the disclosure and do not disclose all possible implementations of the disclosure. Rather, the embodiments are only examples within the scope of the appended claims of the disclosure.

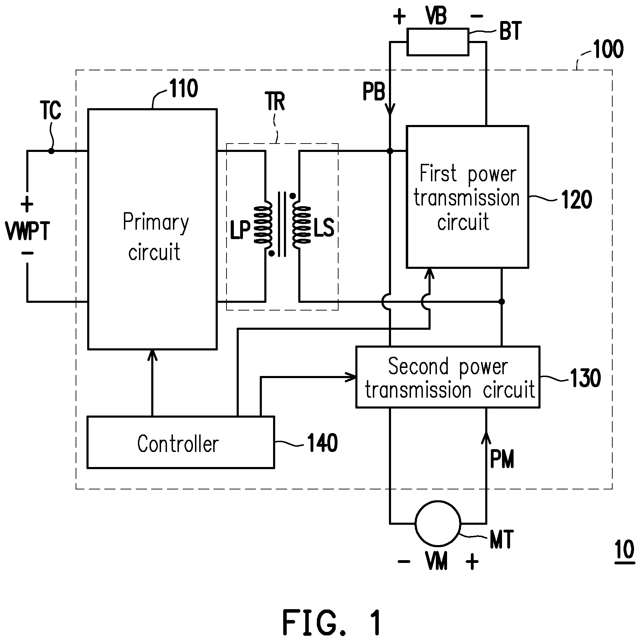

Please refer to FIG. 1. FIG. 1 is a schematic diagram of a power management circuit according to an embodiment of the disclosure. In this embodiment, a power management circuit 100 is used for an electric auxiliary vehicle 10. The electric auxiliary vehicle 10 includes a battery BT, a motor MT, and a power receiving terminal TC. The electric auxiliary vehicle 10 may be, for example, an electric auxiliary wheelchair, an electric auxiliary bicycle, an electric auxiliary scooter, or an electric motorcycle, but the disclosure is not limited thereto. In this embodiment, the electric auxiliary vehicle 10 receives a DC power VWPT at the power receiving terminal TC in a wireless or wired manner, and uses the DC power VWPT to charge the battery BT. The battery BT may be implemented by an aluminum-ion battery, but this embodiment is not limited thereto.

In this embodiment, the power management circuit 100 includes a transformer TR, a primary circuit 110, a first power transmission circuit 120, a second power transmission circuit 130, and a controller 140. The transformer TR includes a primary winding LP and a secondary winding LS. The primary circuit 110 is electrically connected to the primary winding LP and the power receiving terminal TC. The first power transmission circuit 120 is electrically connected to the secondary winding LS and the battery BT. The second power transmission circuit 130 is electrically connected to the secondary winding LS, the battery BT, and the motor MT.

In this embodiment, the controller 140 is electrically connected to the primary circuit 110, the first power transmission circuit 120, and the second power transmission circuit 130. The controller 140 controls the primary circuit 110, the first power transmission circuit 120, and the second power transmission circuit 130 to perform multiple operating modes corresponding to different power transmission manners.

In a first operating mode, the controller 140 controls the primary circuit 110 and the first power transmission circuit 120 to provide the battery power PB of the battery BT to the power receiving terminal TC. In other words, the power management circuit 100 may feed back the battery power PB from the battery BT to the power receiving terminal TC in the first operating mode.

In a second operating mode, the controller 140 controls the second power transmission circuit 130, so that the second power transmission circuit 130 uses the power PM of the motor MT to charge the battery BT. For example, during a riding period, when the electric auxiliary vehicle 10 travels downhill, an electromotive force of the motor MT may provide a large power. Therefore, a voltage value VB of the battery BT is lower than a voltage value VM of the power PM of the motor MT. The power management circuit 100 may use the power PM of the motor MT to charge the battery BT in the second operating mode. Therefore, an endurance of the electric auxiliary vehicle 10 during the riding period can be extended.

It is worth mentioning here that in the first operating mode, the power management circuit 100 feeds back the battery power PB of the battery BT to the power receiving terminal TC. In the second operating mode, the power management circuit 100 uses the power PM of the motor MT to charge the battery BT. In this way, the power management circuit 100 has various power transmission functions.

In addition, in the third operating mode, the controller 140 controls the first power transmission circuit 120 and the second power transmission circuit 130 to use the battery power PB to drive the motor MT. In the fourth operating mode, the controller 140 controls the primary circuit 110. The primary circuit 110 provides the DC power VWPT located at the power receiving terminal TC to the battery BT.

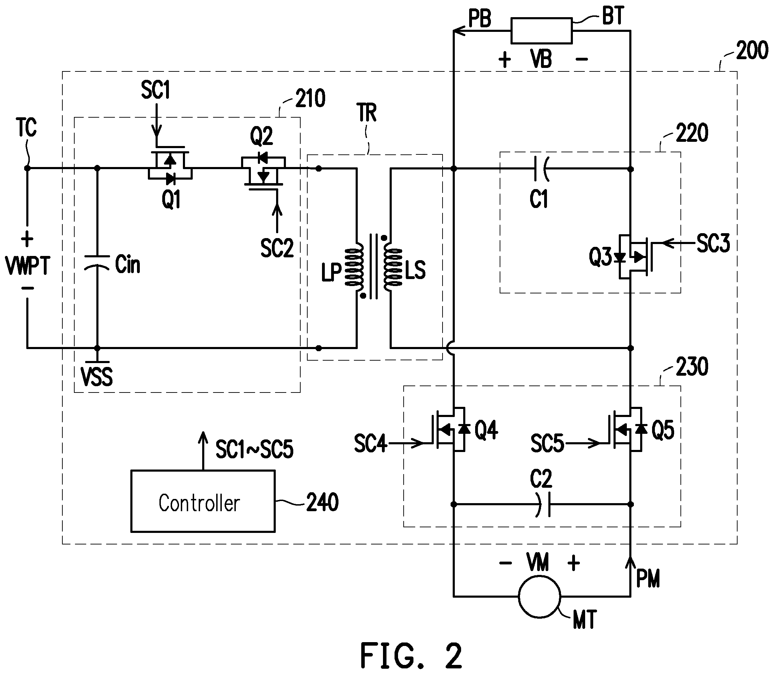

Please refer to FIG. 2. FIG. 2 is a schematic circuit diagram of a power management circuit according to an embodiment of the disclosure. In this embodiment, a power management circuit 200 includes the transformer TR, a primary circuit 210, a first power transmission circuit 220, a second power transmission circuit 230, and a controller 240. The transformer TR includes the primary winding LP and the secondary winding LS.

In this embodiment, the primary circuit 210 includes power switches Q 1, Q2 and an input capacitor Cin. The first terminal of the power switch Q1 is electrically connected to the power receiving terminal TC. The control terminal of the power switch Q1 is electrically connected to the controller 240. The first terminal of the power switch Q2 is electrically connected to the first terminal of the primary winding LP. The second terminal of the power switch Q2 is electrically connected to the second terminal of the power switch Q1. The control terminal of the power switch Q2 is electrically connected to the controller 240. The first terminal of the input capacitor Cin is electrically connected to the power receiving terminal TC. The second terminal of the input capacitor Cin is electrically connected to the second terminal of the primary winding LP and a reference voltage terminal VSS (for example, grounded).

In this embodiment, the first power transmission circuit 220 includes a capacitor C1 and a power switch Q3. The first terminal of the capacitor C1 is electrically connected to the first terminal of the secondary winding LS and the positive electrode of the battery BT. The second terminal of the capacitor C1 is electrically connected to the negative electrode of the battery BT. The first terminal of the power switch Q3 is electrically connected to the second terminal of the capacitor C1 and the negative electrode of the battery BT. The second terminal of the power switch Q3 is electrically connected to the second terminal of the secondary winding LS. The control terminal of the power switch Q3 is electrically connected to the controller 240.

In this embodiment, the second power transmission circuit 230 includes a capacitor C2 and power switches Q4 and Q5. The capacitor C2 and the motor MT are electrically connected in parallel. The first terminal of the power switch Q4 is electrically connected to the first terminal of the secondary winding LS and the positive electrode of the battery BT. The second terminal of the power switch Q4 is electrically connected to a terminal of the capacitor C2. The control terminal of the power switch Q4 is electrically connected to the controller 240. The first terminal of the power switch Q5 is electrically connected to another terminal of the capacitor C2. The second terminal of the power switch Q5 is electrically connected to the second terminal of the power switch Q3 and the second terminal of the secondary winding LS. The control terminal of the power switch Q5 is electrically connected to the controller 240.

In this embodiment, the controller 240 controls the power switches Q1 to Q5 to perform different power transmission functions. The controller 240 uses a control signal SC1 to control the power switch Q1. The controller 240 uses a control signal SC2 to control the power switch Q2. The controller 240 uses a control signal SC3 to control the power switch Q3. The controller 240 uses a control signal SC4 to control the power switch Q4. In addition, the controller 240 uses a control signal SC5 to control the power switch Q5.

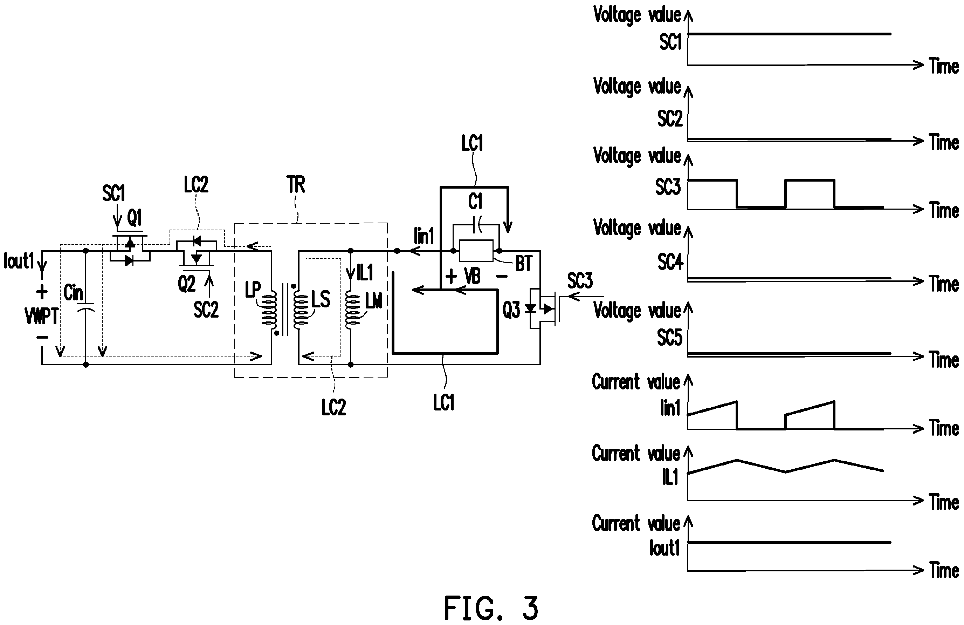

Please refer to FIG. 2 together with FIG. 3. FIG. 3 is a schematic operation diagram of the first operating mode according to an embodiment of the disclosure. In this embodiment, the controller 240 provides the control signal SC1 with a high voltage level, the control signals SC2, SC4, SC5 with low voltage levels, and the control signal SC3 with a duty cycle. The control signal SC3 may be a pulse-width modulation (PWM) signal. Therefore, the controller 240 turns on the power switch Q1 and turns off the power switches Q2, Q4, Q5. The second power transmission circuit 230 is not in operation. In addition, the power switch Q3 performs switching operations based on the duty cycle. The duty cycle is greater than 0% and less than 100%. Therefore, the power management circuit 200 forms an equivalent circuit as shown in FIG. 3 in the first operating mode. The primary circuit 210 receives the battery power PB through the transformer TR, and transmits the battery power PB to the power receiving terminal TC through a diode element in the power switch Q2 and the power switch Q1.

Furthermore, in the first operating mode, the power switch Q3 performs switching operations based on the duty cycle. Therefore, a magnetizing inductor LM connected in parallel with the secondary winding LS is formed. During a period of the power switch Q3 being turned on, the battery power PB first stores power in the capacitor C1 and then stores power in the magnetizing inductor LM. At this time, an input current value Iin1 provided by the battery BT and a current value IL1 flowing through the magnetizing inductor LM increase. Therefore, during the period of the power switch Q3 being turned on, the capacitor C1 and the magnetizing inductor LM may form an energy loop LC1.

During a period of the power switch Q3 being turned off, the power stored in the magnetizing inductor LM enters the secondary winding LS through the dotted terminal of the secondary winding LS, and then flows out from the non-dotted terminal of the primary winding LP. At this time, the current value IL1 flowing through the magnetizing inductor LM decreases. The battery power PB is transmitted to the input capacitor Cin and the power receiving terminal TC through the diode element in the power switch Q2 and the power switch Q2. Therefore, during the period of the power switch Q3 being turned off, the magnetizing inductor LM, the secondary winding LS, the primary winding LP, and the primary circuit 210 may form the energy loop LC1.

In the first operating mode, the controller 240 may detect the voltage value VB of the battery power PB. When the voltage value VB is low, the controller 240 may increase the duty cycle of the control signal SC3. On the other hand, when the voltage value VB is high, the controller 240 may reduce the duty cycle of the control signal SC3. Therefore, a voltage value of the DC power VWPT can be stabilized. Therefore, an output current value Iout1 can also be stabilized.

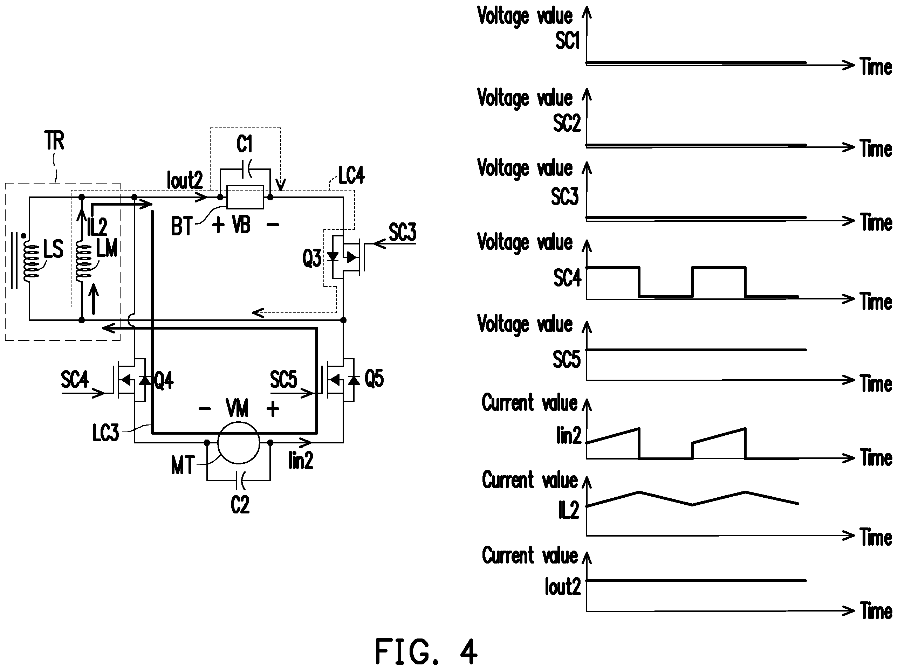

Please refer to FIG. 2 together with FIG. 4. FIG. 4 is a schematic operation diagram of the second operating mode according to an embodiment of the disclosure. In this embodiment, the controller 240 provides the control signal SC5 with a high voltage level, the control signals SC1, SC2, SC3 with low voltage levels, and the control signal SC4 with a duty cycle. The control signal SC4 may be a PWM signal. Therefore, the controller 240 turns on the power switch Q5 and turns off the power switches Q1, Q2, Q3. The primary circuit 210 is not in operation. In addition, the power switch Q4 performs switching operations based on the duty cycle. The duty cycle is greater than 0% and less than 100%. Therefore, the power management circuit 200 forms an equivalent circuit as shown in FIG. 4 in the second operating mode. The power PM generated by the motor MT is provided to the battery BT through the power switch Q5 and the magnetizing inductor LM of the transformer TR.

Furthermore, in the second operating mode, the power switch Q4 performs switching operations based on the duty cycle. Therefore, the magnetizing inductor LM connected in parallel with the secondary winding LS is formed. During a period of the power switch Q4 being turned on, the power PM generated by the motor MT first stores power in the capacitor C2 and then stores power in the magnetizing inductor LM. At this time, an input current value Iin2 provided by the motor MT and a current value IL2 flowing through the magnetizing inductor LM increase. During the period of the power switch Q4 being turned on, the turned on the power switch Q5, the capacitor C2 and the magnetizing inductor LM may form energy loop LC3.

During a period of the power switch Q4 being turned off, a diode element in the power switch Q3 transfers the power stored in the magnetizing inductor LM to the capacitor C1 and the battery BT. At this time, the current value IL2 flowing through the magnetizing inductor LM will decrease. During the period of the power switch Q4 being turned off, the magnetizing inductor LM, the diode element in the power switch Q3, the capacitor C1, and the battery BT may form an energy loop LC4.

In the second operating mode, the controller 240 may detect the voltage value VB of the battery power PB. When the voltage value VB is low, the controller 240 may increase the duty cycle of the control signal SC4. On the other hand, when the voltage value VB is high, the controller 240 may reduce the duty cycle of the control signal SC4. Therefore, the voltage value VB of the battery power PB can be stabilized. Therefore, an output current value Iout2 can also be stabilized. In addition, when the power PM generated by the motor MT is insufficient, the controller 240 leaves the second operating mode. For example, the controller 240 may detect the voltage value VM of the power PM. When the voltage value VM is lower than the voltage value VB, the controller 240 leaves the second operating mode.

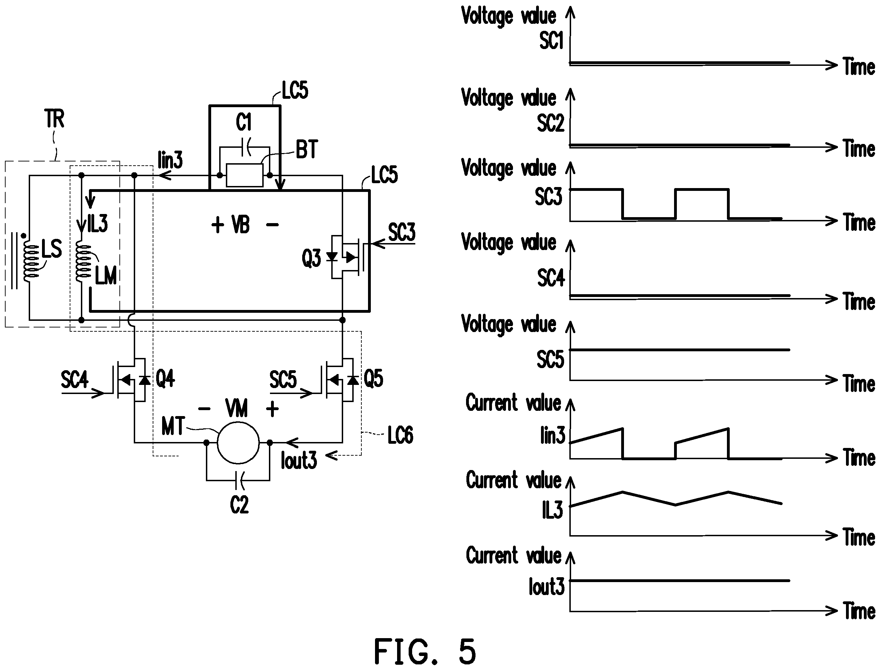

Please refer to FIG. 2 together with FIG. 5. FIG. 5 is a schematic operation diagram of the third operating mode according to an embodiment of the disclosure. In this embodiment, the controller 240 provides the control signal SC5 with a high voltage level, the control signals SC1, SC2, SC4 with low voltage levels, and the control signal SC3 with a duty cycle. The control signal SC3 may be a PWM signal. Therefore, the controller 240 turns on the power switch Q5 and turns off the power switches Q1, Q2, Q4. The primary circuit 210 is not in operation. In addition, the power switch Q3 performs switching operations based on the duty cycle. The duty cycle is greater than 0% and less than 100%. Therefore, the power management circuit 200 forms an equivalent circuit as shown in FIG. 5 in the third operating mode. The battery power PB is provided to the motor MT through the magnetizing inductor LM of the transformer TR, the power switch Q5, and a diode element in the power switch Q4 to drive the motor MT.

Furthermore, in the third operating mode, the power switch Q3 performs switching operations based on the duty cycle. Therefore, the magnetizing inductor LM connected in parallel with the secondary winding LS is formed. During the period of the power switch Q3 being turned on, the battery power PB first stores power in the capacitor C1 and then stores power in the magnetizing inductor LM. At this time, an input current value Iin3 provided by the battery BT and a current value IL3 flowing through the magnetizing inductor LM increase. During the period of the power switch Q3 being turned on, an energy loop LC5 is formed. The energy loop LC5 is the same as the energy loop LC1 in FIG. 3.

During the period of the power switch Q3 being turned off, the power stored in the magnetizing inductor LM is provided to the motor MT through the power switch Q5 and the diode element in the power switch Q4. The current value IL3 flowing through the magnetizing inductor LM decreases. During the period of the power switch Q3 being turned off, the magnetizing inductor LM, the power switch Q5, the diode element in the power switch Q4, and the motor MT may form an energy loop LC6.

In the third operating mode, the controller 240 may detect the voltage value VB of the battery power PB. When the voltage value VB is low, the controller 240 may increase the duty cycle of the control signal SC3. On the other hand, when the voltage value VB is high, the controller 240 may reduce the duty cycle of the control signal SC3. Therefore, the operation of the motor MT can be stabilized. Therefore, the voltage value VM and an output current value Iout3 can also be stabilized.

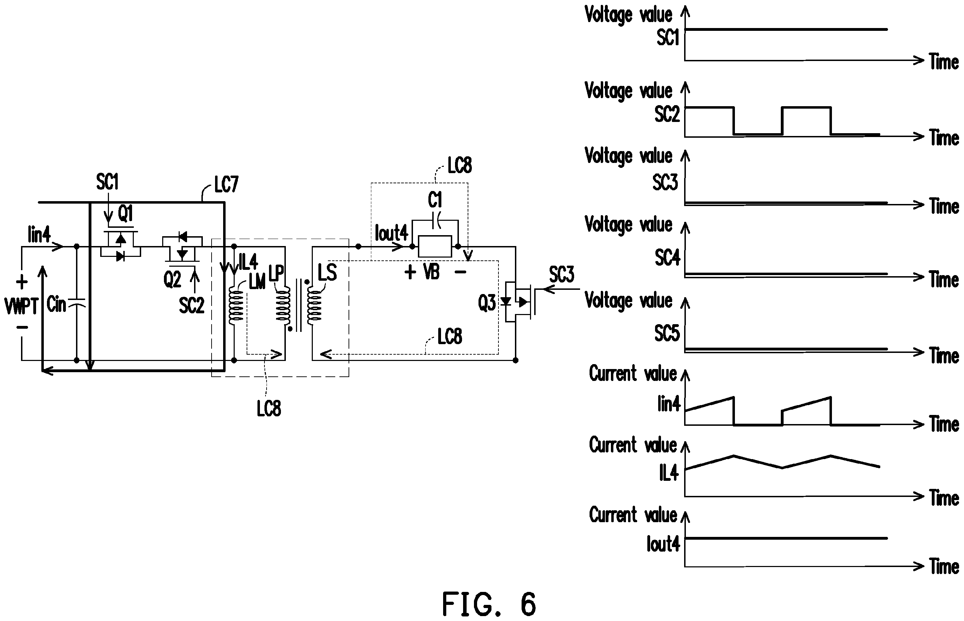

Please refer to FIG. 2 together with FIG. 6. FIG. 6 is a schematic operation diagram of the fourth operating mode according to an embodiment of the disclosure. In this embodiment, the controller 240 provides the control signal SC1 with a high voltage level, the control signals SC3, SC4, SC5 with low voltage levels, and the control signal SC2 with a duty cycle. The control signal SC2 may be a PWM signal. Therefore, the controller 240 turns on the power switch Q1 and turns off the power switches Q3, Q4, Q5. The second power transmission circuit 230 is not in operation. In addition, the power switch Q2 performs switching operations based on the duty cycle. The duty cycle is greater than 0% and less than 100%. Therefore, the power management circuit 200 forms an equivalent circuit as shown in FIG. 6 in the fourth operating mode. The power located at the power receiving terminal TC is provided to the battery BT through the power switches Q1, Q2 and the transformer TR to charge the battery BT.

Furthermore, in the fourth operating mode, the power switch Q2 performs switching operations based on the duty cycle. Therefore, the magnetizing inductor LM connected in parallel with the primary winding LP is formed. During a period of the power switch Q2 being turned on, the primary circuit 210 receives the DC power VWPT through the power receiving terminal TC. The primary circuit 210 uses the input capacitor Cin to store the DC power VWPT, and then stores power in the magnetizing inductor LM through the power switches Q1, Q2. At this time, an input current value Iin4 provided by the primary circuit 210 and a current value IL4 flowing through the magnetizing inductor LM increase. During the period of the power switch Q2 being turned on, the primary circuit 210 and the magnetizing inductor LM may form an energy loop LC7.

During a period of the power switch Q2 being turned off, the power stored in the magnetizing inductor LM enters the primary winding LP from the dotted terminal of the primary winding LP, and then flows out from the dotted terminal of the secondary winding LS to store power in the battery BT and the capacitor C1. Next, the power stored in the magnetizing inductor LM enters the non-dotted terminal of the secondary winding LS through the diode element in the power switch Q3. The current value IL4 flowing through the magnetizing inductor LM decreases. Therefore, during the period of the power switch Q2 being turned off, the transformer TR, the battery BT, and the first power transmission circuit 220 may form an energy loop LC8.

In the fourth operating mode, the controller 240 may detect the voltage value of the DC power VWPT. When the voltage value of the direct current power VWPT is low, the controller 240 may increase the duty cycle of the control signal SC2. On the other hand, when the voltage value of the direct current power VWPT is high, the controller 240 may reduce the duty cycle of the control signal SC2. Therefore, the charging voltage value received by the battery BT can be stabilized. Therefore, an output current value Iout4 can also be stabilized.

In summary, the power management circuit is for the electric auxiliary vehicle and provides multiple power transmission functions. The power management circuit feeds back the battery power of the battery to the power receiving terminal in the first operating mode. The power management circuit uses the power of the motor to charge the battery in the second operating mode. In addition, the power management circuit uses the battery power to drive the motor in the third operating mode, and uses the power from the power receiving terminal to charge the battery in the fourth operating mode.

### Reference Sign List

10: electric auxiliary vehicle
100, 200: power management circuit
110, 210: primary circuit
120, 220: first power transmission circuit
130, 230: second power transmission circuit
140, 240: controller
BT: battery
C1, C2: capacitor
Cin: input capacitor
Iin1 to Iin4: input current value
IL1 to IL4: current value flowing through magnetizing inductor
Iout1 to Iout4: output current value
LC1 to LC8: energy loop
LM: magnetizing inductor
LP: primary winding
LS: secondary winding
MT: motor
PB: battery power
PM: power of motor
Q1 to Q5: power switch
SC1 to SC5: control signal
TC: power receiving terminal
TR: transformer
VB, VM: voltage value
VWPT: DC power

## Claims

1. A power management circuit (100) for an electric auxiliary vehicle (10), wherein the electric auxiliary vehicle (10) comprises a battery (BT), a motor (MT), and a power receiving terminal (TC), wherein the power management circuit (100) comprises:
a transformer (TR), comprising a primary winding (LP) and a secondary winding (LS);
a primary circuit (110), electrically connected to the primary winding (LP) and the power receiving terminal (TC);
a first power transmission circuit (120), electrically connected to the secondary winding (LS) and the battery (BT);
a second power transmission circuit (130), electrically connected to the secondary winding (LS), the battery (BT), and the motor (MT); and
a controller (140), electrically connected to the primary circuit (110), the first power transmission circuit (120), and the second power transmission circuit (130), configured to:
control the primary circuit (110) and the first power transmission circuit (120) in a first operating mode to provide a battery power (PB) of the battery (BT) to the power receiving terminal (TC), and
control the second power transmission circuit (130) in a second operating mode, so that the second power transmission circuit (130) uses a power of the motor (PM) to charge the battery (BT).

2. The power management circuit (100) as claimed in claim 1, wherein the controller (140) controls the first power transmission circuit (120) and the second power transmission circuit (130) in a third operating mode to use the battery power (PB) to drive the motor (MT).

3. The power management circuit (100) as claimed in claim 2, wherein the controller (140) controls the primary circuit (110) in a fourth operating mode, so that the primary circuit (110) provides a DC power (VWPT) located at the power receiving terminal (TC) to the battery (BT).

4. The power management circuit (100) as claimed in claim 1, wherein the primary circuit (110) comprises:
a first power switch (Q1), wherein a first terminal of the first power switch (Q1) is electrically connected to the power receiving terminal (TC), and a control terminal of the first power switch (Q1) is electrically connected to the controller (140);
a second power switch (Q2), wherein a first terminal of the second power switch (Q2) is electrically connected to a first terminal of the primary winding (LP), a second terminal of the second power switch (Q2) is electrically connected to a second terminal of the first power switch (Q1), and a control terminal of the second power switch (Q2) is electrically connected to the controller (140); and
an input capacitor (Cin), a first terminal of the input capacitor (Cin) is electrically connected to the power receiving terminal (TC), a second terminal of the input capacitor (Cin) is electrically connected to a second terminal of the primary winding (LP) and a reference voltage terminal.

5. The power management circuit (100) as claimed in claim 4, wherein the first power transmission circuit (120) comprises:
a first capacitor (C1), wherein a first terminal of the first capacitor (C1) is electrically connected to a first terminal of the secondary winding (LS) and a positive electrode of the battery (BT), and a second terminal of the first capacitor (C1) is electrically connected to a negative electrode of the battery (BT); and
a third power switch (Q3), wherein a first terminal of the third power switch (Q3) is electrically connected to the second terminal of the first capacitor (C1) and the negative electrode of the battery (BT), a second terminal of the third power switch (Q3) is electrically connected to a second terminal of the secondary winding (LS), and a control terminal of the third power switch (Q3) is electrically connected to the controller (140).

6. The power management circuit (100) as claimed in claim 5, wherein the second power transmission circuit (130) comprises:
a second capacitor (C2), electrically connected in parallel with the motor (MT);
a fourth power switch (Q4), wherein a first terminal of the fourth power switch (Q4) is electrically connected to the first terminal of the secondary winding (LS) and the positive electrode of the battery (BT), a second terminal of the fourth power switch (Q4) is electrically connected to a terminal of the second capacitor (C2), and a control terminal of the fourth power switch (Q4) is electrically connected to the controller (140); and
a fifth power switch (Q5), wherein a first terminal of the fifth power switch (Q5) is electrically connected to the other terminal of the second capacitor (C2), a second terminal of the fifth power switch (Q5) is electrically connected to the second terminal of the third power switch (Q3) and the second terminal of the secondary winding (LS), and a control terminal of the fifth power switch (Q5) is electrically connected to the controller (140).

7. The power management circuit (100) as claimed in claim 6, wherein in the first operating mode:
the controller (140) turns off the second power switch (Q2), the fourth power switch (Q4), and the fifth power switch (Q5), and turns on the first power switch (Q1),
the third power switch (Q3) performs switching operations based on a duty cycle,
the duty cycle is greater than 0% and less than 100%, and
the primary circuit (110) receives the battery power (PB) through the transformer (TR), and transmits the battery power (PB) to the power receiving terminal (TC) through a diode element in the second power switch (Q2) and the first power switch (Q1).

8. The power management circuit (100) as claimed in claim 6, wherein in the second operating mode:
the controller (140) turns off the first power switch (Q1), the second power switch (Q2), and the third power switch (Q3), and turns on the fifth power switch (Q5),
the fourth power switch (Q4) performs switching operations based on a duty cycle,
the duty cycle is greater than 0% and less than 100%, and
the power of the motor (PM) is provided to the battery (BT) through the fifth power switch (Q5) and a magnetizing inductor (LM) of the transformer (TR).

9. The power management circuit (100) as claimed in claim 6, wherein in a third operating mode:
the controller (140) turns off the first power switch (Q1), the second power switch (Q2), and the fourth power switch (Q4), and turns on the fifth power switch (Q5),
the third power switch (Q3) performs switching operations based on a duty cycle,
the duty cycle is greater than 0% and less than 100%, and
the battery power (PB) is provided to the motor (MT) through a magnetizing inductor (LM) of the transformer (TR), the fifth power switch (Q5), and a diode element in the fourth power switch (Q4).

10. The power management circuit (100) as claimed in claim 6, wherein in a fourth operating mode:
the controller (140) turns off the third power switch (Q3), the fourth power switch (Q4), and the fifth power switch (Q5), and turns on the first power switch (Q1),
the second power switch (Q2) performs switching operations based on a duty cycle,
the duty cycle is greater than 0% and less than 100%, and
a power located at the power receiving terminal (TC) is provided to the battery (BT) through the first power switch (Q 1), the second power switch (Q2), and the transformer (TR).

## Amended claims

### Amended claims in accordance with Rule 137(2) EPC.

1. A power management circuit (100) for an electric auxiliary vehicle (10), wherein the electric auxiliary vehicle (10) comprises a battery (BT), a motor (MT), and a power receiving terminal (TC), wherein the power management circuit (100) comprises:
a transformer (TR), comprising a primary winding (LP) and a secondary winding (LS);
a primary circuit (110), electrically connected to the primary winding (LP) and the power receiving terminal (TC);
a first power transmission circuit (120), electrically connected to the secondary winding (LS) and the battery (BT);
wherein the power management circuit (100) is **characterized by** further comprising:
a second power transmission circuit (130), electrically connected to the secondary winding (LS), the battery (BT), and the motor (MT); and
a controller (140), electrically connected to the primary circuit (110), the first power transmission circuit (120), and the second power transmission circuit (130), configured to:
control the primary circuit (110) and the first power transmission circuit (120) in a first operating mode to provide a battery power (PB) of the battery (BT) to the power receiving terminal (TC), and
control the second power transmission circuit (130) in a second operating mode when a voltage value (VB) of the battery (BT) is lower than a voltage value (VM) of the power (PM) of the motor (MT),
wherein a magnetizing inductor (LM) connected in parallel with the secondary winding (LS) is formed in the second operating mode, the second power transmission circuit (130) receives a power of the motor (PM) and provides the power of the motor (PM) to charge the battery (BT) through the magnetizing inductor (LM) of the transformer (TR) in the second operating mode.

2. The power management circuit (100) as claimed in claim 1, wherein the controller (140) controls the first power transmission circuit (120) and the second power transmission circuit (130) in a third operating mode to use the battery power (PB) to drive the motor (MT).

3. The power management circuit (100) as claimed in claim 2, wherein the controller (140) controls the primary circuit (110) in a fourth operating mode, so that the primary circuit (110) provides a DC power (VWPT) located at the power receiving terminal (TC) to the battery (BT).

4. The power management circuit (100) as claimed in claim 1, wherein the primary circuit (110) comprises:
a first power switch (Q1), wherein a first terminal of the first power switch (Q1) is electrically connected to the power receiving terminal (TC), and a control terminal of the first power switch (Q1) is electrically connected to the controller (140);
a second power switch (Q2), wherein a first terminal of the second power switch (Q2) is electrically connected to a first terminal of the primary winding (LP), a second terminal of the second power switch (Q2) is electrically connected to a second terminal of the first power switch (Q1), and a control terminal of the second power switch (Q2) is electrically connected to the controller (140); and
an input capacitor (Cin), a first terminal of the input capacitor (Cin) is electrically connected to the power receiving terminal (TC), a second terminal of the input capacitor (Cin) is electrically connected to a second terminal of the primary winding (LP) and a reference voltage terminal.

5. The power management circuit (100) as claimed in claim 4, wherein the first power transmission circuit (120) comprises:
a first capacitor (C1), wherein a first terminal of the first capacitor (C1) is electrically connected to a first terminal of the secondary winding (LS) and a positive electrode of the battery (BT), and a second terminal of the first capacitor (C1) is electrically connected to a negative electrode of the battery (BT); and
a third power switch (Q3), wherein a first terminal of the third power switch (Q3) is electrically connected to the second terminal of the first capacitor (C1) and the negative electrode of the battery (BT), a second terminal of the third power switch (Q3) is electrically connected to a second terminal of the secondary winding (LS), and a control terminal of the third power switch (Q3) is electrically connected to the controller (140).

6. The power management circuit (100) as claimed in claim 5, wherein the second power transmission circuit (130) comprises:
a second capacitor (C2), electrically connected in parallel with the motor (MT);
a fourth power switch (Q4), wherein a first terminal of the fourth power switch (Q4) is electrically connected to the first terminal of the secondary winding (LS) and the positive electrode of the battery (BT), a second terminal of the fourth power switch (Q4) is electrically connected to a terminal of the second capacitor (C2), and a control terminal of the fourth power switch (Q4) is electrically connected to the controller (140); and
a fifth power switch (Q5), wherein a first terminal of the fifth power switch (Q5) is electrically connected to the other terminal of the second capacitor (C2), a second terminal of the fifth power switch (Q5) is electrically connected to the second terminal of the third power switch (Q3) and the second terminal of the secondary winding (LS), and a control terminal of the fifth power switch (Q5) is electrically connected to the controller (140).

7. The power management circuit (100) as claimed in claim 6, wherein in the first operating mode:
the controller (140) turns off the second power switch (Q2), the fourth power switch (Q4), and the fifth power switch (Q5), and turns on the first power switch (Q1),
the third power switch (Q3) performs switching operations based on a duty cycle,
the duty cycle is greater than 0% and less than 100%, and
the primary circuit (110) receives the battery power (PB) through the transformer (TR), and transmits the battery power (PB) to the power receiving terminal (TC) through a diode element in the second power switch (Q2) and the first power switch (Q1).

8. The power management circuit (100) as claimed in claim 6, wherein in the second operating mode:
the controller (140) turns off the first power switch (Q1), the second power switch (Q2), and the third power switch (Q3), and turns on the fifth power switch (Q5),
the fourth power switch (Q4) performs switching operations based on a duty cycle,
the duty cycle is greater than 0% and less than 100%, and
the power of the motor (PM) is provided to the battery (BT) through the fifth power switch (Q5) and the magnetizing inductor (LM) of the transformer (TR).

9. The power management circuit (100) as claimed in claim 6, wherein in a third operating mode:
the controller (140) turns off the first power switch (Q1), the second power switch (Q2), and the fourth power switch (Q4), and turns on the fifth power switch (Q5),
the third power switch (Q3) performs switching operations based on a duty cycle,
the duty cycle is greater than 0% and less than 100%, and
the battery power (PB) is provided to the motor (MT) through the magnetizing inductor (LM) of the transformer (TR), the fifth power switch (Q5), and a diode element in the fourth power switch (Q4).

10. The power management circuit (100) as claimed in claim 6, wherein in a fourth operating mode:
the controller (140) turns off the third power switch (Q3), the fourth power switch (Q4), and the fifth power switch (Q5), and turns on the first power switch (Q1),
the second power switch (Q2) performs switching operations based on a duty cycle,
the duty cycle is greater than 0% and less than 100%, and
a power located at the power receiving terminal (TC) is provided to the battery (BT) through the first power switch (Q1), the second power switch (Q2), and the transformer (TR).
